# EUROPÄISCHE PATENTANMELDUNG

(11) **EP 4 671 215 A1**
(43) Veröffentlichungstag der Anmeldung: **31.12.2025**
(21) Anmeldenummer: 25185470.9
(22) Anmeldetag: 26.06.2025
(51) Int. Cl.: C02F 1/02, F24H 1/00, F28D 7/00

(54) **VORRICHTUNG ZUR THERMISCHEN AUFBEREITUNG VON FLÜSSIGKEITEN, SYSTEM ZUR BEREITSTELLUNG VON BRAUCHWARMWASSER UMFASSEND DIE GENANNTE VORRICHTUNG, SOWIE VERFAHREN ZUR THERMISCHEN AUFBEREITUNG**

(30) Priorität: 26.06.2024 EP 24184613
(71) Anmelder: KelvinPRO AG, 6331 Hünenberg (CH)
(72) Erfinder: DREWS, Dirk, 8718 Schänis (CH)
(74) Vertreter: Dittmann, Rolf

(57) **Zusammenfassung**

Offenbart ist eine Vorrichtung (1) zur thermischen Aufbereitung von Flüssigkeiten. Diese umfasst eine Fluidkammer (12) mit einem Mittel (121) zur Wärmezufuhr zu einer innerhalb des Planums befindlichen Flüssigkeit. Der Fluidkammer sind Fluidpassagen (111, 115) einer Wärmetauschvorrichtung vor- und nachgeschaltet. Im Betrieb strömt eine aufzubereitende Flüssigkeit (51) durch eine erste Fluidpassage (111) der Wärmetauschvorrichtung in die Fluidkammer ein. Die Flüssigkeit strömt durch die Fluidkammer und entlang dem Mittel zur Wärmezufuhr und strömt durch eine zweite Fluidpassage (115) der Wärmetauschvorrichtung wieder ab. Dabei erwärmt das durch die zweite Fluidpassage abströmende Flüssigkeit die in der ersten Fluidpassage zuströmende Flüssigkeit, so, dass der Temperatur der abströmenden Flüssigkeit (62) nur gering über der Temperatur der zuströmenden Flüssigkeit (51) liegt. Auf diese Weise kann nahezu die gesamte in der Vorrichtung zur thermischen Aufbereitung einer Flüssigkeit zur Erreichung einer Mindesttemperatur zugeführte Wärme wieder rekuperiert werden und die massenstromspezifisch über das Mittel zur Wärmezufuhr zugeführte Leistung kann auch bei einer vergleichsweise grossen Temperaturerhöhung der Flüssigkeit innerhalb der Vorrichtung zur thermischen Aufbereitung klein gehalten werden.

## Beschreibung

### TECHNISCHES GEBIET

Die vorliegende Beschreibung betrifft eine Vorrichtung zur thermischen Aufbereitung von Flüssigkeiten, ein System zur Bereitstellung von Brauchwarmwasser umfassend die genannte Vorrichtung, sowie Verfahren zur thermischen Aufbereitung von Flüssigkeiten und insbesondere von Brauchwasser.

### TECHNOLOGISCHER HINTERGRUND

Bei der Bereitstellung von Brauchwarmwasser ist zusehends die potenzielle Gefährdung durch Legionellen in den Fokus geraten. Dies wird teilweise auch durch behördliche Regulatorien adressiert. Bei Legionellen handelt es sich um stäbchenförmige Bakterien, die in geringer Menge in sämtlichen Oberflächengewässern weltweit sowie im Grundwasser vorkommen. Bleibt ihre Anzahl klein, stellen sie für den Menschen keine Gefahr dar. Erwärmt sich das Wasser jedoch auf über 25 Grad Celsius, können sich die Keime innerhalb kürzester Zeit vermehren. Gelangen sie dann, z. B. beim Duschen, aber auch via Klimaanlagen, Luftbefeuchter, Whirlpools und dergleichen über feine Wassertröpfchen in die Lunge, kann dies im schlimmsten Fall eine teils tödlich verlaufende Lungenentzündung zur Folge haben. Die idealen Bedingungen für Ihre Vermehrung finden Legionellen im Temperaturbereich von 25 bis 55 Grad Celsius. Liegt die Warmwassertemperatur zwischen 35 und 45 Grad Celsius, kann sich die Anzahl der Legionellen sogar innerhalb von nur drei Stunden verdoppeln. Legionellen finden in Hausinstallationen häufig beste Vermehrungsbedingungen vor. So sind es dort nicht nur die Temperaturen, die ihr Wachstum begünstigen. Auch in Bezug auf Nährstoffe werden sie in der Hausinstallation oft gut versorgt, und in Brauchwarmwasserspeichern mit stagnierendem Wasser erhalten Sie auch Zeit, sich zu vermehren.

Empfehlungen gehen daher dahin, das Wasser auf mindestens 60°C aufzuheizen, um die Legionellen abzutöten. Bei einer Temperatur von 70°C und darüber dauert es nur Sekunden, die Legionellen zuverlässig abzutöten. Je nach Land bestehen diesbezüglich sogar gesetzliche Vorschriften. Betreiber von Anlagen zur Brauchwassererwärmung für Dritte, wie in Mehrfamilienhäusern, Hotels und öffentlichen Einrichtungen - Sporthallen, Schwimmbäder, Krankenhäuser etc. - setzen sich auch einem erheblichen Haftungsrisiko aus, wenn Sie den Empfehlungen nicht folgen oder gar Vorschriften nicht einhalten. Andererseits wird das Brauchwarmwasser ja häufigst gar nicht bei den zur Legionellenbekämpfung erforderlichen hohen Temperatur vom Verbraucher benötigt bzw. gewünscht und an der Entnahmestelle mit kaltem Wasser vermischt und wieder abgekühlt. So existiert zum Beispiel in Deutschland bei gewerblicher Anwendung die Vorschrift, ansonsten die Empfehlung, einen Mischer vorzusehen, der das Brauchwarmwasser vor der Entnahme an einer Verbraucherarmatur durch Zumischung von kaltem Wasser auf 45°C herunterzukühlen, um Verbrühungen zu vermeiden.

Hieraus resultiert ein Zielkonflikt mit dem Ziel, Energie sparsam und effizient einzusetzen. Mit Wärmepumpen können die geforderten Temperaturen im Brauchwarmwasser nicht oder nur bei sehr ineffizientem und verschleissbegünstigendem Betrieb erreicht werden, da die obere Prozesstemperatur der Wärmepumpenanlage ja immer einige °C über der Zieltemperatur des Brauchwarmwassers liegen muss, um einen effizienten Wärmeübergang an das Brauchwasser zu gewährleisten. Elektrische Widerstandsheizungen oder fossil betriebene Heizungsanlagen hingegen sind unerwünscht und teilweise sogar gesetzlich verboten.

Auch bei anderen Flüssigkeiten kann der Bedarf bestehen, diese thermisch aufzubereiten, beispielsweise um Gase oder andere flüchtige Komponenten aus der Flüssigkeit auszutreiben.

### DARSTELLUNG DES GEGENSTANDES DER VORLIEGENDEN BESCHREIBUNG

Es soll eine Vorrichtung zur thermischen Aufbereitung von Flüssigkeiten der eingangs genannten Art angegeben werden. Diese soll geeignet sein, die oben genannten Problematiken zu adressieren. Es soll ermöglicht werden, Brauchwarmwasser oder auch andere Flüssigkeiten möglichst energieeffizient thermisch aufzubereiten, beispielsweise eine thermische Desinfektion von Brauchwarmwasser vorzunehmen. Ebenso sind ein System zur Bereitstellung von Brauchwarmwasser umfassend die genannte Vorrichtung, sowie Verfahren zur thermischen Aufbereitung von Flüssigkeiten und insbesondere von Brauchwasser angegeben.

Weitere Wirkungen und Vorteile der hier beschriebenen Gegenstände, ob explizit angegeben oder nicht, ergeben sich im Lichte der vorliegenden Beschreibung.

Beschrieben ist eine Vorrichtung zur thermischen Aufbereitung von Flüssigkeiten, wie beispielsweise und insbesondere Brauchwasser. Die Vorrichtung umfasst eine Wärmetauscheinrichtung und eine Fluidkammer. Die Fluidkammer kann, wie dem Fachmann geläufig, auch als Plenum bezeichnet werden, dies in Übereinstimmung mit der beispielsweise im Bereich der Strömungsmaschinen, oder auch in der Lüftungs- und Klimatechnik, verwendeten Nomenklatur. Es wird an dieser Stelle beispielsweise auf die im Bereich der Gasturbinen auch im deutschen Sprachgebrauch üblichen Termini «Brennkammerplenum» oder «Verdichterplenum» verwiesen. Die Begriffe «Fluidkammer» und «Plenum» werden daher im Rahmen des vorliegenden Dokuments als äquivalent betrachtet und können fallweise beide mit der selben Bedeutung verwendet werden. Die Wärmetauscheinrichtung umfasst eine erste Fluidpassage und eine zweite Fluidpassage, wobei die erste Fluidpassage und die zweite Fluidpassage für einen Wärmeaustausch zwischen einer Flüssigkeit in der ersten Fluidpassage und einer Flüssigkeit in der zweiten Fluidpassage konfiguriert sind. Die Fluidkammer weist wenigstens ein Mittel zur Wärmezufuhr zu einer Flüssigkeit in der Fluidkammer auf. Die erste Fluidpassage und die zweite Fluidpassage stehen mit der Fluidkammer in Fluidverbindung, wodurch ebenfalls die erste Fluidpassage und die zweite Fluidpassage auf dem Weg über die Fluidkammer miteinander in Fluidverbindung stehen. Wenigstens ein Teil wenigstens eines Mittels zur Wärmezufuhr zu der Flüssigkeit in der Fluidkammer ist in einem Strömungsweg zwischen der ersten Fluidpassage und der zweiten Fluidpassage innerhalb der Fluidkammer angeordnet.

Der Fachmann erkennt zwanglos, dass die Vorrichtung zur thermischen Aufbereitung zwei bzw. wenigstens zwei äussere Anschlüsse aufweisen muss, die mit den ersten und zweiten Fluidpassagen in Fluidverbindung stehen, wobei die Flüssigkeit von aussen über einen der äusseren Anschlüsse via eine der ersten und zweiten Fluidpassagen der Fluidkammer zuführbar ist und via die andere der ersten und zweiten Fluidpassagen aus der Fluidkammer über einen anderen der äusseren Anschlüsse nach aussen abführbar ist. Die ersten und zweiten Fluidpassagen sind insbesondere derart innerhalb des Wärmetauschers angeordnet, dass zwischen der zuströmenden und der abströmenden Flüssigkeit der Wärmetausch in einer Gegenstromkonfiguration stattfindet, derart, dass die am wenigsten abgekühlte abströmende Flüssigkeit mit der bereits am stärksten erwärmten zuströmenden Flüssigkeit Wärme austauscht und umgekehrt die bereits am stärksten abgekühlte abströmende Flüssigkeit mit der frisch zuströmenden Flüssigkeit Wärme austauscht. Dergestalt wird das treibende Temperaturgefälle für den Wärmeaustausch über die gesamte Wärmetauschvorrichtung möglichst hoch gehalten.

Aus diesem Aufbau resultiert beim Betrieb der Vorrichtung zur thermischen Aufbereitung von Flüssigkeiten folgender Effekt: Eine Flüssigkeit bzw. ein Flüssigkeitsmassenstrom wird durch eine erste der Fluidpassagen der Wärmetauschvorrichtung der Fluidkammer zugeführt. Ebenso wird eine Flüssigkeit bzw. ein Flüssigkeitsmassenstrom über die andere, zweite, der Fluidpassagen der Wärmetauschvorrichtung aus der Fluidkammer abgeführt. Flüssigkeit strömt innerhalb der Fluidkammer von der ersten zur zweiten Fluidpassage und über- bzw. umströmt wenigstens einen Teil eines Mittels zur Wärmezufuhr zur Flüssigkeit und wird dabei erwärmt. Die erwärmte Flüssigkeit strömt sodann durch die zweite Fluidpassage aus der Fluidkammer ab und gibt Wärme an die in der ersten Fluidpassage zuströmende Flüssigkeit ab. Je nach Effizienz der Wärmetauschvorrichtung liegt die Temperatur der Flüssigkeit beim Austritt aus der zweiten Fluidpassage, insbesondere beim Gegenstrombetrieb der Wärmetauschvorrichtung, nur wenig über der Temperatur der von aussen der ersten Fluidpassage zugeführten Flüssigkeit, die im Gegenzug im Wärmetausch mit der die zweite Fluidpassage durchströmenden Flüssigkeit vorgewärmt wird und, bei entsprechender Auslegung der Wärmetauschvorrichtung, beim Eintritt in die Fluidkammer eine Temperatur aufweist, die nur wenig unter der Temperatur des aus der Fluidkammer über die zweite Fluidpassage abströmenden Flüssigkeit liegt. Der der Fluidkammer über die erste Fluidpassage zuströmende Massenstrom ist im Allgemeinen, aber nicht in jedem Fall, gleich dem aus der Fluidkammer über die zweite Fluidpassage abströmenden Massenstrom. Die Netto-Wärmeabfuhr aus der vorgeschlagenen Vorrichtung zur thermischen Aufbereitung von Flüssigkeiten ist somit auf ein Minimum reduziert. Beim «Anfahren» der vorgeschlagenen Vorrichtung zur thermischen Aufbereitung von Flüssigkeiten kann der Flüssigkeit in der Fluidkammer mehr thermische Leistung zugeführt werden als thermische Leistung netto aus der vorgeschlagenen Vorrichtung zur thermischen Aufbereitung von Flüssigkeiten abströmt. Auf diese Weise steigt die Temperatur der aus der Fluidkammer in die zweite Fluidpassage einströmenden Flüssigkeit sukzessive an, selbst wenn die thermische Überschussleistung nur gering ist. Auf diese Weise kann die maximale Temperatur einer die vorgeschlagene Vorrichtung zur thermischen Aufbereitung von Flüssigkeiten durchströmenden Flüssigkeit bis zu einer für die thermische Aufbereitung mindest erforderlichen Temperatur aufgeheizt werden. Wenn diese Temperatur erreicht ist, kann die in der Fluidkammer zugeführte Wärmeleistung heruntergeregelt werden. Beispielsweise kann ein Mittel zur Temperaturmessung an geeigneter Stelle angeordnet sein, durch welche die maximale Temperatur oder wenigstens näherungsweise die maximale Temperatur der Flüssigkeit beim Durchströmen der vorgeschlagenen Vorrichtung zur thermischen Aufbereitung von Flüssigkeiten gemessen wird, und diese kann innerhalb einer Regelung für die der Flüssigkeit innerhalb der Fluidkammer zugeführten Wärmeleistung als Regelgrösse wirken. Bei in etwa bekannten Massenströmen kann auch die zugeführte Wärmeleistung derart bemessen sein, dass diese maximale Temperatur selbsttätig nach oben begrenzt ist, da die absolute Temperaturdifferenz zwischen der aus der zweiten Fluidpassage abströmenden Flüssigkeit und der der ersten Fluidpassage zuströmenden Flüssigkeit mit steigender Temperaturdifferenz zwischen der maximalen Temperatur der Flüssigkeit beim Durchströmen der vorgeschlagenen Vorrichtung und der Temperatur der der ersten Fluidpassage zuströmenden Flüssigkeit zunimmt und somit der Netto-Wärmeverlust ansteigt, bis sich ein Gleichgewicht einstellt.

"Ein" oder "eine" sind im Rahmen der vorliegenden Beschreibung als unbestimmte Artikel und nicht als Zahlwort zu verstehen, sofern nicht explizit auf eine andere Bedeutung, beispielsweise durch die Verwendung von "genau ein" oder "genau eine" hingewiesen wird.

Insbesondere kann vorgesehen sein, dass ein Gehäuse, in dem die Fluidkammer enthalten ist, für eine Vorzugsorientierung seiner Anordnung vorgesehen ist. Dies kann konstruktiv bedingt sein, kann aber beispielsweise auch, alternativ oder ergänzend, durch Markierungen und/oder eine Montageanleitung vorgesehen sein. In dieser Vorzugsorientierung mündet eine der Fluidpassagen im unteren oder bodennahen Bereich, beispielsweise im unteren Drittel oder unteren Viertel, der Fluidkammer, in der Fluidkammer, während die andere der Fluidpassagen im oberen Bereich, beispielsweise im unteren Drittel oder unteren Viertel der Fluidkammer, in der Fluidkammer mündet. Dabei kann vorgesehen werden, dass der Vorlauf in die Fluidkammer hinein über die Fluidpassage erfolgen soll, die im unteren Bereich der Fluidkammer in die Fluidkammer mündet und der Rücklauf aus der Fluidkammer heraus über die Fluidpassage erfolgen soll, die im oberen Bereich der Fluidkammer in die Fluidkammer mündet. Bedingt durch eine Temperaturschichtung in der Fluidkammer ist damit gewährleistet, dass immer erwärmte Flüssigkeit aus der Fluidkammer abgeführt wird, während die zuströmende Flüssigkeit infolge der Erwärmung selbständig nach oben zur Mündung der Rücklaufpassage strömt.

Vorgesehen sein kann weiterhin, dass wenigstens eine der beiden Fluidpassagen der Wärmetauschvorrichtung über eine Überströmleitung mit der Fluidkammer in Fluidverbindung steht. Das heisst, an die Fluidpassage schliesst sich die Überströmleitung an, die ihrerseits innerhalb der Fluidkammer endet. Die eigentliche Mündung der genannten Fluidpassage in der Fluidkammer, an der aus der Fluidpassage stammendes Fluid in die Fluidkammer einströmt bzw. an der für die genannte Fluidpassage bestimmtes Fluid die Fluidkammer verlässt, ist daher dort angeordnet, wo die Überströmleitung in der Fluidkammer endet. Ebenso kann vorgesehen sein, dass wenigstens eine der Fluidpassagen unmittelbar mit der Fluidkammer in Fluidverbindung steht. In diesem Fall endet die genannte Fluidpassage also in der Fluidkammer.

In Ausgestaltungen der vorgeschlagenen Vorrichtung zur thermischen Aufbereitung von Flüssigkeiten beträgt der Abstand zwischen einer Mündung der ersten Fluidpassage in der Fluidkammer, an der die erste Fluidpassage der Wärmetauschvorrichtung mit der Fluidkammer in Fluidverbindung steht, und einer Mündung der zweiten Fluidpassage in der Fluidkammer, an der die zweite Fluidpassage der Wärmetauschvorrichtung mit der Fluidkammer in Fluidverbindung steht, wenigstens 50% der Erstreckung der Fluidkammer entlang einer Richtung zwischen den beiden genannten Mündungen. Wie leicht nachvollziehbar ist, kann die Flüssigkeit auf dem Weg von einer der Fluidpassagen zur anderen der Fluidpassagen innerhalb der Fluidkammer umso effektiver erwärmt werden, je länger der Strömungsweg innerhalb der Fluidkammer ist. Zusätzlich zur geometrischen Anordnung ist dabei die Strömungsrichtung der Strömung der Flüssigkeit aus bzw. in die Mündung der jeweiligen Fluidpassage zu berücksichtigen, welche den effektiven Strömungsweg der Flüssigkeit innerhalb der Fluidkammer zusätzlich verlängern kann.

In Ausgestaltungen der vorgeschlagenen Vorrichtung zur thermischen Aufbereitung von Flüssigkeiten sind die Wärmetauschvorrichtung und die Fluidkammer in einem gemeinsamen Gehäuse angeordnet sind, wobei innerhalb des Gehäuses eine Trennwand angeordnet ist, welche die Fluidkammer und die Wärmetauschvorrichtung voneinander trennt. In diesem Zusammenhang kann vorgesehen sein, dass die erste Fluidpassage innerhalb einer Rohrleitung gebildet ist, welche auf einer Seite der Trennwand zwischen der Trennwand und einer Wand des Gehäuses verläuft. Die Rohrleitung kann eine beliebige Querschnittsgeometrie aufweisen. Die zweite Fluidpassage ist auf der genannten Seite der Trennwand zwischen der Trennwand und der Wand des Gehäuses sowie um die Rohrleitung herum gebildet. Dies ermöglicht den Wärmetausch zwischen einer Flüssigkeit innerhalb der Rohrleitung und einer Flüssigkeit, welche sich in der zweiten Fluidpassage um die Rohrleitung herum befindet. In weiteren, nicht einschränkenden spezifischeren Ausführungsformen ist die Trennwand eine umlaufende Trennwand. Die Fluidkammer ist radial innerhalb der umlaufenden Trennwand gebildet und die Wärmetauschvorrichtung ist in einem Ringraum zwischen der umlaufenden Trennwand und der Wand des Gehäuses gebildet. Dabei kann weiterhin vorgesehen sein, dass eine erste Fluidpassage der Wärmetauschvorrichtung in einer wendelförmig in dem Ringraum verlaufenden Rohrleitung gebildet ist und die zweite Fluidpassage der Wärmetauschvorrichtung in dem Ringraum und um die Rohrleitung herum gebildet ist.

In bestimmten Ausgestaltungen der vorgeschlagenen Vorrichtung zur thermischen Aufbereitung von Flüssigkeiten erstreckt sich die Trennwand von einem Boden des Gehäuses. In einem an den Boden angrenzenden Bereich trennt die Trennwand die Fluidkammer und die Wärmetauschvorrichtung voneinander, wobei in dem an den Boden angrenzenden Bereich die Fluidkammer und die Wärmetauschvorrichtung insbesondere hermetisch getrennt sind, während die Trennwand in einem an eine Decke des Gehäuses angrenzenden Bereich, wobei die Decke des Gehäuses dem Boden des Gehäuses gegenüberliegend angeordnet ist, wenigstens eine Öffnung aufweist, durch die eine unmittelbare Fluidverbindung zwischen der Fluidkammer und wenigstens einer der Fluidpassagen der Wärmetauschvorrichtung im deckennahen Bereich der Fluidkammer hergestellt ist.

Ebenso kann vorgesehen sein, dass sich die Trennwand von einem Boden des Gehäuses erstreckt und in einem an den Boden angrenzenden Bereich die Fluidkammer und die Wärmetauschvorrichtung, insbesondere hermetisch, voneinander trennt, und eine Überströmleitung, welche mit einer der Fluidpassagen der Wärmetauschvorrichtung in Fluidverbindung steht, in einem an eine Decke des Gehäuses angrenzenden Bereich aus der Wärmetauschvorrichtung in die Fluidkammer geführt ist und innerhalb der Fluidkammer in Richtung zum Boden des Gehäuses zu einem bodennahen Bereich der Fluidkammer geführt ist und dort in die Fluidkammer mündet. Die Decke des Gehäuses ist dem Boden des Gehäuses gegenüberliegend angeordnet. Auf diese Weise ist eine Fluidverbindung zwischen der Fluidkammer und wenigstens einer der Fluidpassagen der Wärmetauschvorrichtung im bodennahen Bereich der Fluidkammer hergestellt.

Das wenigstens eine Mittel zur Wärmezufuhr zu einer Flüssigkeit in der Fluidkammer umfasst insbesondere eine Blankdrahtheizung. Bei der Blankdrahtheizung ergibt sich die Wärmezufuhr zur Flüssigkeit nicht daraus, dass ein Draht durch den darin fliessenden Strom erwärmt wird und die Wärme auf die Flüssigkeit übertragen wird. Es werden in Kontakt mit der Flüssigkeit in der Fluidkammer zwei gegenüber der Flüssigkeit nicht isolierte Elemente bereitgestellt, die auf unterschiedlichen Potenzialen liegen, so, dass zwischen den beiden Elementen eine Potenzialdifferenz besteht. Aufgrund dieser Potenzialdifferenz fliesst elektrischer Strom durch die Flüssigkeit, wobei die Flüssigkeit unmittelbar durch den durchfliessenden elektrischen Strom erwärmt wird. Beispielsweise kann ein blanker Draht mit der Phase einer Wechselstromleitung verbunden sein, während ein anderes elektrisch leitendes Element, welcher mit der Flüssigkeit in Berührung steht, mit der Erde oder einem Nullleiter verbunden ist. Die Elemente der Blankdrahtheizung heizen sich nicht über die Temperatur der Flüssigkeit auf und sind daher zumindest geringer anfällig gegen aus Wasser ausfallendem Kalk als es ein Heizstab wäre, der ja eine deutlich höhere Temperatur aufweisen müsste. Zum Beispiel ist eine Drahtwendel in der Fluidkammer eingebaut, welche mit einer Stromquelle verbunden ist. Das Erdpotenzial kann beispielsweise durch in der Fluidkammer angeordnete geerdete oder mit dem Nullleiter verbundene Kupferplatten oder andere elektrisch leitende Elemente, die mit der Erde oder mit dem Nullleiter verbunden sind, bereitgestellt sein.

Weiterhin beschrieben ist ein System zur Bereitstellung von Brauchwarmwasser mit einem Brauchwarmwassererzeuger und/oder -speicher und einem Brauchwarmwasser-Zirkulationssystem. Diese Formulierung umfasst explizit auch kombinierte Brauchwarmwassererzeuger und -speicher wie auch Systeme, die nur einen Brauchwarmwassererzeuger oder nur einen Brauchwarmwasserspeicher umfassen, Systeme, die sowohl einen Brauchwarmwassererzeuger als auch einen Brauchwarmwasserspeicher umfassen oder auch solche Systeme, die sowohl einen Brauchwarmwassererzeuger oder einen Brauchwarmwasserspeicher als auch zusätzlich einen kombinierten Brauchwarmwassererzeuger und -speicher umfassen. Ein Brauchwarmwasser-Zirkulationssystem ist konfiguriert, um Fluid aus dem Brauchwarmwassererzeuger und/oder -speicher zu entnehmen und in den Brauchwarmwassererzeuger und/oder -speicher zurückzuführen. Das Brauchwarmwasser-Zirkulationssystem wird nachfolgend auch verkürzt als «Zirkulationssystem» bezeichnet. Das Zirkulationssystem ist an dem Brauchwarmwassererzeuger und/oder -speicher angeschlossen ist. In das Zirkulationssystem ist eine Vorrichtung zur thermischen Aufbereitung von Flüssigkeiten der oben beschriebenen Art derart integriert, dass innerhalb des Brauchwarmwasser-Zirkulationssystems eine erste der Fluidpassagen der Wärmetauschvorrichtung, die Fluidkammer sowie die zweite der Fluidpassagen der Wärmetauschvorrichtung hydraulisch in Reihe geschaltet sind. Hierdurch ist es ermöglicht, den Massenstrom des Brauchwarmwassers, der durch das Zirkulationssystem geführt wird, laufend thermisch zu desinfizieren, auch wenn das Brauchwarmwasser im Brauchwarmwasserspeicher mit einer niedrigeren Temperatur bereitgestellt wird als für die thermische Desinfektion eigentlich notwendig wäre. Gleichzeitig wird das Wasser, das aus der Vorrichtung zur thermischen Aufbereitung von Flüssigkeiten abströmt, wieder auf eine Temperatur abgekühlt, die nur geringfügig über der Temperatur liegt, mit der das Wasser der Vorrichtung zur thermischen Aufbereitung von Flüssigkeiten zuströmt. So kann das Wasser im Brauchwarmwassererzeuger und/oder -speicher beispielsweise mit einer Temperatur im Bereich von 45°C bis 50°C bereitgestellt werden, mit der sie auch vom Verbraucher gewünscht wird. Bei dieser Temperatur kann die Aufheizung des Wassers im Brauchwarmwassererzeuger problemlos mittels einer Wärmepumpe und/oder Solarthermie erfolgen. Insofern ist das beschriebene System zur Bereitstellung von Brauchwarmwasser ebenfalls in einer Konfiguration offenbart, in der zur Erwärmung des Wassers im Brauchwarmwassererzeuger ausschliesslich eine oder mehrere Wärmepumpen und/oder Solarthermie-Heizungen vorgesehen sind. Die thermische Desinfektion findet beim Durchströmen der in dem Zirkulationssystem angeordneten Vorrichtung zur thermischen Aufbereitung von Flüssigkeiten statt. In dieser wiederum wird, wie oben dargelegt, die Wärme des zur thermischen Desinfektion aufgeheizten Wassers in der Wärmetauschvorrichtung grossenteils wiedergewonnen und auf das zuströmende Wasser übertragen. Der massenstromspezifische Leistungsbedarf der Vorrichtung zur thermischen Aufbereitung von Flüssigkeiten ist daher vergleichsweise gering. Indem andererseits das Brauchwarmwasser aus dem Brauchwarmwassererzeuger und/oder -speicher umgewälzt und thermisch desinfiziert wird, kann die Legionellenkonzentration im Brauchwarmwassererzeuger und/oder -speicher unter den gesundheitlich unbedenklichen oder gesetzlich zulässigen Werten gehalten werden Selbstverständlich müssen dazu die Umwälzraten und die Leistung des Mittels zur Wärmezufuhr der Vorrichtung zur thermischen Aufbereitung an das Volumen des Brauchwarmwassererzeugers und/oder -speichers und die erwartete Vermehrungsrate von Legionellen angepasst sein, was der Fachmann aber ohne Weiteres zu bewerkstelligen vermag.

Es kann weiterhin vorgesehen sein, dass von dem Brauchwarmwasser-Zirkulationssystem wenigstens eine Stichleitung abzweigt, die zu wenigstens einer Armatur zur Entnahme von Brauchwasser führt. Eine solche Ausführungsform bietet sich insbesondere dann an, wenn ein Brauchwarmwasser-Zirkulationssystem bereits in einer Gebäudeinstallation vorhanden ist. Hier finden Brauchwarmwasser-Zirkulationssysteme beispielsweise Verwendung, um innerhalb der Gebäudeinstallation warmes Wasser möglichst nahe an die Verbraucherarmaturen zu führen. Wenn das Wasser in einer vom Brauchwarmwassererzeuger und/oder -speicher bis zur Verbraucharmatur führenden Leitung stillsteht, falls dass kein Warmwasser bezogen wird, kühlt das Wasser in der entsprechenden Leitung ab. Beim Öffnen der Armatur muss nun zuerst die gesamte Leitung durchgespült werden bis dort wieder warmes Wasser ankommt. Gerade bei grossen Installationen mit langen Leitungswegen resultiert dies in einer merklichen Komforteinbusse und einer nicht unerheblichen Verschwendung von Trinkwasser. Daneben besteht wiederum auch das Risiko der Vermehrung von Legionellen in der Leitung mit stagnierendem und abkühlendem Brauchwarmwasser. Es finden daher Zirkulationssysteme Verwendung, die vom Brauchwarmwassererzeuger und/oder -speicher abzweigen und wenigstens einen Teil des entnommenen Brauchwarmwassers wieder in diesen zurückführen. Durch eine Pumpe kann in dem Zirkulationssystem ein gewisser Mindestmassenstrom an Brauchwasser geführt werden, derart, dass dort das Wasser während des Betriebs der Pumpe nicht übermässig abkühlen kann. Von dem Zirkulationssystem der Gebäudeinstallation führen die Stichleitungen zu den Verbraucherarmaturen. Derart steht Warmwasser wesentlich schneller beim Verbraucher zur Verfügung. Andererseits können über das Zirkulationssystem massive Wärmeverluste stattfinden, insbesondere dann, wenn das Wasser zur Vermeidung von Legionellenvermehrung mit 60°C und mehr im Brauchwarmwassererzeuger und/oder -speicher bereitgestellt wird. Daneben kann die Bereitstellung von Brauchwarmwasser bei derartigen Temperaturen nicht oder nur unter sehr ungünstigen Betriebszuständen mittels Wärmepumpen erfolgen. Gemäss dem vorliegend vorgeschlagenen Gegenstand ist die Vorrichtung zur thermischen Aufbereitung von Flüssigkeiten in der oben beschriebenen Weise in das Brauchwarmwasser-Zirkulationssystem integriert. Das Brauchwarmwasser strömt also mit einer Temperatur durch das Zirkulationssystem und zu den Verbraucherarmaturen, die geringer ist als die zur Legionellenvernichtung bzw. - reduktion erforderliche Temperatur. Die Temperatur, mit der das Brauchwarmwasser durch das Zirkulationssystem und zu den Verbraucherarmaturen strömt, kann beispielsweise bei den oben genannten 45°C bis 50°C liegen. Gegenüber einem Fall, in dem das Wasser mit 60°C oder mehr in das Zirkulationssystem einströmt, reduzieren sich die Wärmeverluste über das Zirkulationssystem einer Gebäudeinstallation also erheblich. In bestimmten beispielhaften Ausführungsformen des Systems zur Bereitstellung von Brauchwarmwasser, bei denen eine oder mehrere Stichleitungen zur Versorgung von einer oder mehreren Armaturen vom Brauchwarmwasser-Zirkulationssystem abzweigen, ist die Vorrichtung zur thermischen Aufbereitung in einem Rücklaufbereich des Zirkulationssystems, stromab des am weitesten stromab gelegenen Abzweigs einer Stichleitung zu einer Verbraucherarmatur, angeordnet. Somit wird die Vorrichtung zur thermischen Aufbereitung immer nur von dem Massenstrom durchströmt, der wieder zum Brauchwarmwassererzeuger und/oder -speicher zurückströmt, und nicht, wenn Armaturen zum Bezug von Brauchwarmwasser geöffnet werden, zusätzlich mit dem entnommenen Massenstrom. Derart ist der Massenstrom, den die Vorrichtung zur thermischen Aufbereitung verarbeiten muss, konstant oder variiert nur vergleichsweise gering. Damit wird auch der elektrische Leistungsbedarf der Vorrichtung zur thermischen Aufbereitung gering und vorhersagbar und weitgehend konstant gehalten.

Ein Verfahren zur thermischen Brauchwarmwasser-Aufbereitung in einem System zur Bereitstellung von Brauchwarmwasser der oben beschriebenen Art umfasst, wie oben angedeutet, einen Massenstrom von Brauchwarmwasser aus dem Brauchwarmwassererzeuger und/oder -speicher zu entnehmen und wenigstens einen Teilmassenstrom des Massenstroms von Brauchwarmwasser durch die erste der Fluidpassagen der Wärmetauschvorrichtung der Fluidkammer zuzuführen. Dem Brauchwarmwassermassenstrom, der der Fluidkammer zugeführt wird, wird in der Fluidkammer Wärme zugeführt. Wenigstens ein Teilmassenstrom des der Fluidkammer zugeführten Brauchwarmwassermassenstroms wird durch die zweite der Fluidpassagen der Wärmetauschvorrichtung wieder dem Brauchwarmwasser-Zirkulationssystem zugeführt. Dabei wird der durch die erste der Fluidpassagen der Wärmetauschvorrichtung geführte Brauchwarmwassermassenstrom im Wärmetausch mit dem durch die zweite der Fluidpassagen der Wärmetauschvorrichtung geführten Brauchwarmwassermassenstrom vorgewärmt und der durch die zweite der Fluidpassagen der Wärmetauschvorrichtung geführte Brauchwarmwassermassenstrom wird im Wärmetausch mit dem durch die erste der Fluidpassagen der Wärmetauschvorrichtung geführten Brauchwarmwassermassenstrom abgekühlt. Insbesondere wird der durch die zweite der Fluidpassagen aus der Fluidkammer abgeführte Brauchwassermassenstrom wieder dem Brauchwarmwassererzeuger und/oder - speicher zugeführt. Zumindest in einem stationären Betrieb werden der Brauchwassermassenstrom durch die erste der Fluidpassagen, der Brauchwassermassenstrom durch die zweite der Fluidpassagen und der Brauchwassermassenstrom in der Fluidkammer in häufigen Konfigurationen gleich sein. Zumindest im stationären Betrieb umfasst das Verfahren, das Brauchwasser innerhalb der Fluidkammer vor dem Eintritt in die zweite der Fluidpassagen auf eine mindest erforderliche Temperatur von 60°C oder mehr oder 70°C oder mehr aufzuheizen. Hohe Temperaturen tragen zu einer schnelleren Wirkung der thermischen Desinfektion bei einer vergleichsweise kurzen Aufenthaltszeit des Brauchwassers in der Fluidkammer bei und sind mit der vorgeschlagenen Vorrichtung zur thermischen Aufbereitung energetisch unproblematisch, da die Wärme des Brauchwassers beim Austritt aus der Fluidkammer in der Wärmetauschvorrichtung grossenteils rekuperiert wird. Beim «Anfahren» des Prozesses kann diese Temperatur temporär auch niedriger sein, wobei diese sich, wie oben dargestellt, sukzessive auf die Zieltemperatur erhöht. Das Brauchwasser im Brauchwarmwassererzeuger und/oder -speicher wird insbesondere bei Temperaturen in einem Bereich von 40°C bis 50°C bereitgestellt. Die Aufheizung des Brauchwassers auf die Temperatur im Brauchwarmwassererzeuger und/oder -speicher erfolgt insbesondere mittels einer oder mehrerer Wärmepumpen und/oder mittels Solarthermie.

Schliesslich ist ein Verfahren zur thermischen Aufbereitung einer Flüssigkeit beschrieben, welches umfasst, einen ersten Massenstrom der Flüssigkeit einer Vorrichtung zur Wärmezufuhr zuzuführen und zu erwärmen und einen zweiten Massenstrom der erwärmten Flüssigkeit von der Vorrichtung zur Wärmezufuhr abzuführen, wobei der erste Massenstrom im Wärmetausch mit dem zweiten Massenstrom vorgewärmt wird und der zweite Massenstrom im Wärmetausch mit dem ersten Massenstrom abgekühlt wird. Der erste Massenstrom und der zweite Massenstrom sind in Ausgestaltungen des Verfahrens gleich. Zumindest im stationären Betrieb erfolgt er Erwärmung der Flüssigkeit durch das Mittel zur Wärmezufuhr auf mindestens eine mindest erforderliche Temperatur, die für die angestrebte thermische Behandlung notwendig ist. Beim «Anfahren» des Prozesses kann diese Temperatur temporär auch niedriger sein, wobei diese sich, wie oben dargestellt, sukzessive auf die Zieltemperatur erhöht. Die Leistung des wenigstens ein Mittels zur Wärmezufuhr zu der Flüssigkeit in der Fluidkammer kann beispielsweise in Abhängigkeit von der Temperatur des Massenstroms der Flüssigkeit nach der Abkühlung im Wärmetauscher und/oder einer maximalen Temperatur der Flüssigkeit nach der Wärmezufuhr und vor der Abkühlung im Wärmetauscher geregelt werden.

Die oben genannten spezifischen Ausführungsformen können untereinander kombiniert werden. Weitere, nicht spezifisch offenbarte Ausführungsformen der Lehre dieses Dokumentes erschliessen sich dem Fachmann ohne Weiteres.

### KURZE BESCHREIBUNG DER FIGUREN

Die hier dargelegten Sachverhalte werden nachfolgend anhand ausgewählter in der Zeichnung dargestellter Ausführungsbeispiele näher erläutert. Im Einzelnen zeigen
- Fig. 1: eine schematische Darstellung der vorgeschlagenen Vorrichtung zur thermischen Aufbereitung von Flüssigkeiten;
- Fig. 2: eine erste beispielhafte Ausführungsform eines Systems zur Bereitstellung von Brauchwarmwasser mit einem kombinierten Brauchwarmwassererzeuger und -speicher und einem Brauchwarmwasser-Zirkulationssystem, wobei eine Vorrichtung zur thermischen Aufbereitung von Flüssigkeiten der hier vorgeschlagenen Art in dem Brauchwarmwasser-Zirkulationssystem angeordnet ist;
- Fig. 3: eine besonders kompakte Ausführungsform einer Vorrichtung zur thermischen Aufbereitung von Flüssigkeiten der hier vorgeschlagenen Art;
- Fig. 4: eine beispielhafte Ausführungsform einer sogenannten Blankdrahtheizung als Mittel zur Wärmezufuhr zur Flüssigkeit innerhalb der Fluidkammer;
- Fig. 5: eine zweite beispielhafte Ausführungsform eines Systems zur Bereitstellung von Brauchwarmwasser, die nur einen Brauchwarmwassererzeuger umfasst und kein stagnierendes Brauchwarmwasser-Speichervolumen wobei eine Vorrichtung zur thermischen Aufbereitung von Flüssigkeiten der hier vorgeschlagenen Art in einem Brauchwarmwasser-Zirkulationssystem angeordnet ist; und
- Fig. 6: eine weitere beispielhafte Ausführungsform eines Systems zur Bereitstellung von Brauchwarmwasser mit einem kombinierten Brauchwarmwassererzeuger und -speicher und einem Brauchwarmwasser-Zirkulationssystem, wobei eine Vorrichtung zur thermischen Aufbereitung von Flüssigkeiten der hier vorgeschlagenen Art in dem Brauchwarmwasser-Zirkulationssystem angeordnet ist.

Die Zeichnungen sind teilweise stark schematisiert. Nicht für das Verständnis der beschriebenen Gegenstände notwendige Einzelheiten können weggelassen worden sein. Weiterhin zeigen die Zeichnungen nur ausgewählte Ausführungsbeispiele und dürfen nicht zur Einschränkung der in den Ansprüchen umschriebenen Gegenstände herangezogen werden. Nicht gezeigte Ausführungsformen können durchaus von den Ansprüchen gedeckt sein.

### AUSFÜHRUNGSBEISPIELE

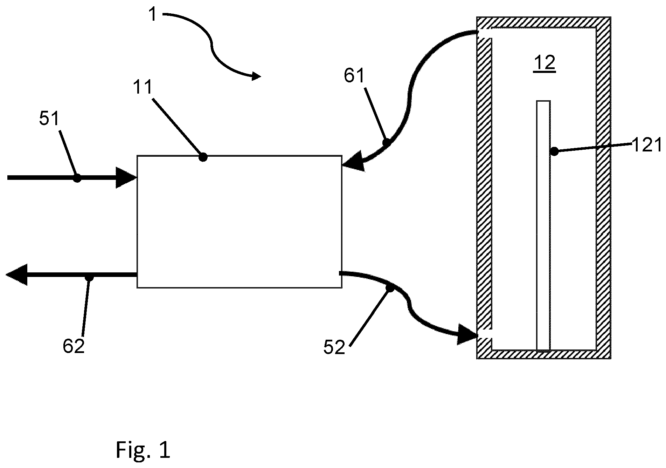

Figur 1 zeigt eine schematisierte Darstellung einer Vorrichtung 1 zur thermischen Aufbereitung von Flüssigkeiten der oben beschriebenen Art. Grundlegend umfasst diese eine Wärmetauschvorrichtung 11 und eine Fluidkammer 12, in welchem wenigstens ein Teil eines Mittels zur Zufuhr von Wärme 121 zu einer in der Fluidkammer enthaltenen oder die Fluidkammer durchströmenden Flüssigkeit angeordnet ist. Aufzubereitende Flüssigkeit 51 strömt der Wärmetauschvorrichtung 11 zu und durchströmt diese. Am Austritt aus dem Wärmetauscher strömt aufzubereitende Flüssigkeit 52, die, wie unten dargelegt, im Betrieb der Vorrichtung 1 zur thermischen Aufbereitung von Flüssigkeiten vorgewärmt ist, aus dem Wärmetauscher 11 aus und in die Fluidkammer 12 ein. In der Fluidkammer 12 wird die Flüssigkeit durch das Mittel zur Wärmezufuhr 121 erwärmt und strömt als aufbereitete Flüssigkeit 61 aus der Fluidkammer ab. Mit Vorteil wird die Fluidkammer 12, bzw. ein Gehäuse, in dem die Fluidkammer 12 eingeschlossen ist, in der dargestellten Art und Weise derart angeordnet, dass die Eintrittsöffnung in die Fluidkammer im unteren Bereich der Fluidkammer 12 mündet und die Austrittsöffnung im oberen Bereich der Fluidkammer 12 angeordnet ist. Die erwärmte Flüssigkeit in der Fluidkammer strömt aufgrund des Dichteunterschied nach oben und strömt durch die Austrittsöffnung aus der Fluidkammer ab. Die aufbereitete Flüssigkeit 61 strömt in die Wärmetauschvorrichtung 11 ein und durchströmt diese im Gegenstrom zur eintretenden aufzubereitenden Flüssigkeit 51 und gibt dabei Wärme an die aufzubereitende Flüssigkeit ab. Am Austritt aus der Wärmetauschvorrichtung 11 ist daher die aufzubereitende Flüssigkeit 52 vorgewärmt und die aufbereitete Flüssigkeit 62 am Austritt aus der Wärmetauschvorrichtung 11 ist abgekühlt. Bei entsprechender Auslegung und Dimensionierung der Wärmetauchvorrichtung 11 liegt die Temperatur der vorgewärmten aufzubereitenden Flüssigkeit 52 nur wenig unter der Temperatur der erwärmten Flüssigkeit 61 am Austritt aus der Fluidkammer. Die Temperatur der Flüssigkeit 62 am Austritt aus der Wärmetauschvorrichtung 11 liegt entsprechend nur wenig über der Temperatur der aufzubereitenden Flüssigkeit 51 am Eintritt in die Wärmetauschvorrichtung 11. Auf diese Weise wird ein grosser Teil der Wärme, die der Flüssigkeit in der Vorrichtung 1 zur thermischen Aufbereitung von Flüssigkeiten zugeführt wird, rekuperiert und der Flüssigkeit muss nur eine vergleichsweise geringe massenstromspezifische Wärmeleistung in der Fluidkammer 12 zugeführt werden. Derart erwärmt sich das Innere der Fluidkammer beim Anfahren der vorgeschlagenen Vorrichtung 1 zur thermischen Aufbereitung von Flüssigkeiten auch bei vergleichsweise geringer zugeführter massenstromspezifischer Wärmeleistung sukzessive, bis eine für die thermische Aufbereitung der Flüssigkeit mindest erforderliche Temperatur erreicht ist, derart, dass die Flüssigkeit 62, die aus der Vorrichtung 1 zur thermischen Aufbereitung von Flüssigkeiten abströmt, thermisch aufbereitet ist. Beispielsweise kann vorgesehen sein, dass die maximale Temperatur in der Fluidkammer 12 gross genug ist, um innerhalb der Verweilzeit der Flüssigkeit in der Fluidkammer 12 Legionellen abzutöten. Beispielsweise sterben Legionellen bei Temperaturen über 70°C innerhalb von nur Sekunden ab. Ebenso kann in anderen Anwendungen vorgesehen sein, dass die Temperatur so hoch angehoben wird, dass beispielsweise flüchtige Stoffe verdampfen oder gelöste Gase ausgetrieben werden. Die Temperatur kann durch eine Regelung der Heizleistung nach oben begrenzt werden. Andererseits nimmt mit einer steigenden Differenz zwischen der Maximaltemperatur in der Fluidkammer bzw. der Temperatur der aufbereiteten Flüssigkeit 62 beim Austritt aus der Fluidkammer und der zuströmenden aufzubereitenden Flüssigkeit 51 am Eintritt in die Wärmetauschvorrichtung auch die Temperaturdifferenz zwischen der abgekühlten aufbereiteten Flüssigkeit 62 und der zuströmenden aufzubereitenden Flüssigkeit 51 am Eintritt in die Wärmetauschvorrichtung zu. Auf diese Weise ist bei einer bestimmten massenstromspezifisch in der Fluidkammer 12 zugeführten Wärmeleistung, bzw. bei einem bestimmten die Fluidkammer 12 durströmenden Massenstrom und einer bestimmten Heizleistung der Mittel zur Wärmezufuhr 121, die Maximaltemperatur der Flüssigkeit begrenzt, aufgrund der mit der Maximaltemperatur des Prozesses zunehmenden Verlustleistung beim Austritt der aufbereiteten Flüssigkeit 62 aus der Wärmetauschvorrichtung. In jedem Falle kann aufgrund der weitgehenden Rekuperation der zugeführten Wärme mit einer vergleichsweise geringen massenstromspezifisch in der Fluidkammer 12 zugeführten Wärmeleistung eine für die angestrebte thermische Aufbereitung erforderliche Temperatur erreicht werden.

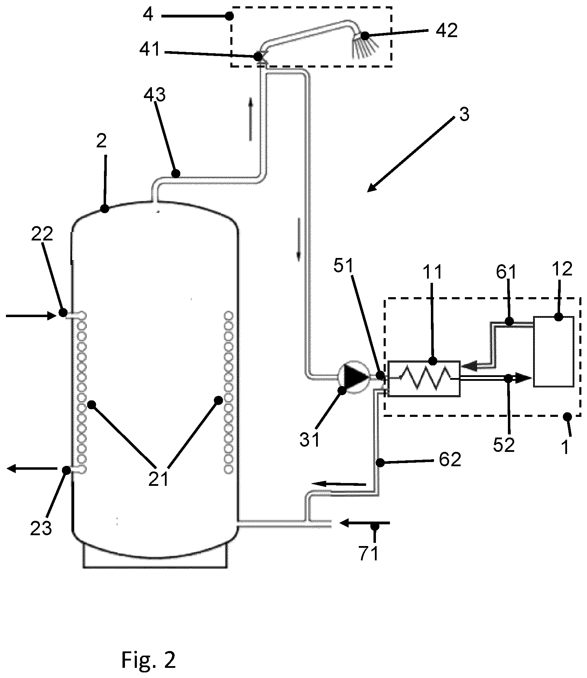

Figur 2 zeigt ein erstes Beispiel für ein System zur Bereitstellung von Brauchwarmwasser mit einem kombinierten Brauchwarmwassererzeuger und - speicher 2 und einer Vorrichtung 1 zur thermischen Aufbereitung von Flüssigkeiten der vorstehend beschriebenen Art. Der Brauchwarmwassererzeuger und -speicher wird in diesem Ausführungsbeispiel nachfolgend vereinfacht als Brauchwarmwasserspeicher bezeichnet. Eine Stichleitung 43, über die Brauchwarmwasser einer Armatur 4 zur Entnahme von Brauchwarmwasser zuführbar ist, zweigt von dem Brauchwarmwasser-Zirkulationssystem 3 ab. Die Armatur ist symbolisch mit einem Abstell- und Regelorgan 41 und einem Brausekopf 42 dargestellt. Über eine Zirkulationspumpe 31 wird fortwährend, auch dann, wenn an der Armatur 4 kein Brauchwarmwasser entnommen wird, Flüssigkeit aus dem Brauchwarmwasserspeicher 2 entnommen und in den Brauchwarmwasserspeicher 2 zurückgeführt. Auf diese Weise steht am Abzweig einer Stichleitung, die vom Brauchwarmwasser-Zirkulationssystem 3 abzweigt und zur Armatur 4 führt, immer warmes Wasser zur Verfügung. Somit steht auch nach längerer Nichtbenutzung der Armatur 4 innert kurzer Zeit nach dem Öffnen des Abstell- und Regelorgans 41 warmes Wasser am Brausekopf 42 zur Verfügung, ohne dass erst abgekühltes stagnierendes Wasser aus der gesamten Leitungsstrecke der Stichleitung 43 vom Brauchwarmwasserspeicher 2 bis zur Armatur 4 verdrängt werden müsste. Ein Massenstrom 71 an Frischwasser, der dem an der Armatur 4 entnommenen Brauchwarmwasser-Massenstrom entspricht, wird dem System zur Bereitstellung von Brauchwarmwasser zugeführt.

Der Brauchwarmwasserspeicher 2 umfasst in seinem Inneren ein wendelförmig angeordnetes Wärmetauscherrohr 21. Dieses wird zur Bereitstellung von Brauchwarmwasser von einem Heizfluid durchströmt, das an einem Vorlaufanschluss 22 dem Wärmetauscherrohr 21 zuströmt und durch einen Rücklaufanschluss 23 aus dem Wärmetauscherrohr abströmt. Sofern die Temperatur des zuströmenden Heizfluids höher ist als die Temperatur des Brauchwarmwassers im Brauchwarmwasserspeicher 2, wird Wärme vom Heizfluid auf das Brauchwarmwasser übertragen. Im Umkehrschluss bedeutet dies natürlich, dass das Brauchwarmwasser im Brauchwarmwasserspeicher nicht über die Vorlauftemperatur des Heizfluids erwärmt werden kann und im Allgemeinen um einige K niedriger sein wird als die Vorlauftemperatur des Heizfluids. Sofern das Heizfluid von einer Wärmepumpe oder einer Solarthermieanlage zur Verfügung gestellt wird, ist es nicht möglich oder zumindest nicht wirtschaftlich und technisch sinnvoll, die Temperatur des Brauchwarmwassers im Brauchwarmwasserspeicher 2 über ein bestimmtes Mass zu erhöhen. Eine Temperatur im Bereich von 45°C bis 50°C ist aber aus Sicht des Warmwasserverbrauchers absolut ausreichend, da der Verbraucher an der Armatur 4 in der Regel kein wärmeres Wasser bezieht und wärmeres Brauchwarmwasser durch die Zumischung von kaltem Wasser herunterkühlt. Allerdings ist dies auch ein Temperaturbereich, in dem sich Legionellen im grossenteils stagnierenden Brauchwarmwasser innerhalb des Brauchwarmwasserspeichers 2 stark vermehren können. Daher ist im Brauchwarmwasser-Zirkulationssystem 3 eine Vorrichtung 1 zur thermischen Aufbereitung so angeordnet, dass sie vom zirkulierenden Brauchwarmwasser durchströmt wird. Das aufzubereitende Brauchwarmwasser 51 strömt mit einer Temperatur von beispielsweise 45°C in eine erste Fluidpassage einer Wärmetauschvorrichtung 11 ein und durchströmt diese. Das aus der ersten Fluidpassage der Wärmetauschvorrichtung 11 abströmende Brauchwarmwasser 52 strömt in die Fluidkammer 12 ein und wird dort auf mindestens beispielsweise 60°C, beispielsweise auf über 70°C, erwärmt, um allenfalls vorhandene Legionellen abzutöten. Das derart aufbereitete Brauchwarmwasser 61 mit der hohen Temperatur von beispielsweise 65°C oder 70°C strömt aus der Fluidkammer 12 in eine zweite Fluidpassage der Wärmetauschvorrichtung 11 ein und durchströmt diese. Die erste und zweite Fluidpassage der Wärmetauschvorrichtung 11 sind zur Wärmeübertragung zwischen in den genannten Passagen strömenden Flüssigkeiten konfiguriert. Das aufbereitete Brauchwarmwasser 61 durchströmt die Wärmetauschvorrichtung 11 im Gegenstrom zum aufzubereitenden Brauchwarmwasser 51. Bei zweckmässiger Auslegung und Dimensionierung der Wärmeübertragungsflächen innerhalb der Wärmetauschvorrichtung 11 gibt das aufbereitete Brauchwarmwasser 61 nahezu die gesamte in der Vorrichtung 1 zur thermischen Aufbereitung zugeführte Wärme wieder an das aufzubereitende Brauchwarmwasser 51 ab und strömt als abgekühltes aufbereitetes Brauchwarmwasser 62 beispielsweise mit einer Temperatur von 46°C aus der Vorrichtung 1 zur thermischen Aufbereitung ab. Das entsprechend vorgewärmte aufzubereitende Brauchwarmwasser 52 strömt der Fluidkammer 12 in diesem Zahlenbeispiel mit 64°C zu. Damit muss das Brauchwarmwasser in der Fluidkammer nur um 1°C erwärmt werden. Bei einem von der Pumpe 31 zirkulierten Massenstrom von 50 g/s - dies entspricht 3 l/min - ergibt sich die erforderliche Heizleistung in der Fluidkammer 12 zu rund 210 W. Diese Heizleistung ist mit der beschriebenen Vorrichtung 1 zur thermischen Aufbereitung ausreichend, um das Brauchwarmwasser zur thermischen Desinfektion für die Legionellenabtötung behandeln. Bei dem beispielhaft genannten Massenstrom wird der Inhalt eines Brauchwarmwasserspeichers mit 600 l Inhalt in weniger als 3 ½ Stunden einmal komplett umgewälzt und einer thermischen Desinfektion unterzogen. Die gesetzlichen Vorgaben spezifizieren eine maximal zulässige Legionellenkonzentration. Eine absolute gänzliche Legionellenvernichtung ist nicht erforderlich.

Die Vorrichtung 1 zur thermischen Aufbereitung ist stromab des Abzweigs aller Stichleitungen zu Entnahmearmaturen 4 angeordnet. Daher wird der Massenstrom durch die Vorrichtung 1 zur thermischen Aufbereitung nicht von den Entnahmemassenströmen beeinflusst und bleibt konstant.

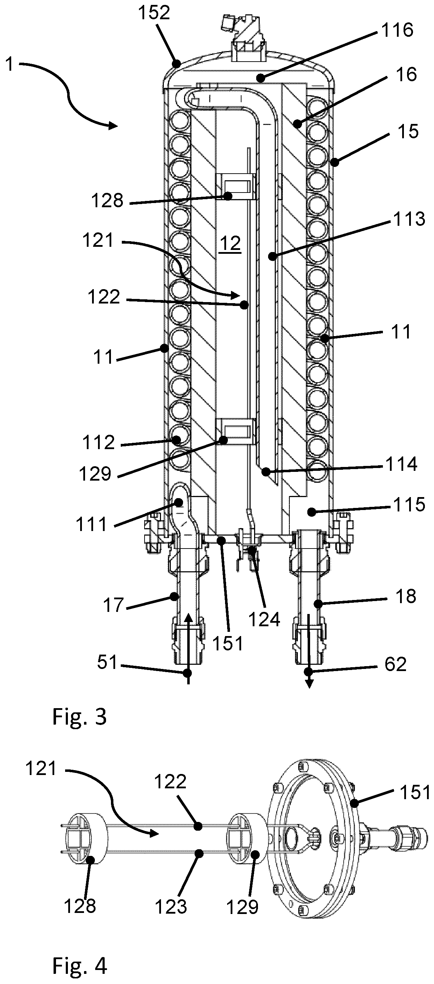

Die Figur 3 zeigt eine besonders kompakte Bauart einer Vorrichtung 1 zur thermischen Aufbereitung von Flüssigkeiten der beschriebenen Art. Die Wärmetauschvorrichtung 11 und die Fluidkammer 12 sind in einem gemeinsamen Gehäuse 15 angeordnet. Das Gehäuse 15 ist für eine aufrechtstehende Anordnung mit einem untenliegenden Boden 151 und einer dem Boden 151 gegenüber obenliegenden Decke 152 vorgesehen. Eine Trennwand 16 unterteilt das Innere des Gehäuses 15 in die Fluidkammer 12 und die Wärmetauschvorrichtung 11. Die Trennwand schliesst sich an den Boden 151 an und trennt in einem an den Boden 151 angrenzenden Bereich die Fluidkammer 12 und die Wärmetauschvorrichtung 11 voneinander. Die Trennwand ist im dargestellten Beispiel zylindrisch und schliesst die Fluidkammer 12 radial innenliegend ein, während die Wärmetauschvorrichtung 11 in einem Ringspalt zwischen der Trennwand 16 und einer Aussenwand des Gehäuses 15 angeordnet ist. Die Wärmetauschvorrichtung 11 umfasst eine erste Fluidpassage 111, die in einer wendelförmig innerhalb des Ringspaltes verlaufenden Rohrleitung 112 gebildet ist. Die Wärmetauschvorrichtung 11 umfasst weiterhin eine zweite Fluidpassage 115, welche innerhalb des Ringspalts und um die Rohrleitung herum gebildet ist. Somit steht innerhalb der Wärmetauschvorrichtung 11 an der Wandung der Rohrleitung 12 eine grosse Wärmeübertragungsfläche zwischen einer Flüssigkeit in der ersten Fluidpassage 111 und einer Flüssigkeit in der zweiten Fluidpassage 115 zur Verfügung. Die Rohrleitung kann weiterhin durch ein Wellrohr gebildet sein. Ein Anschlussstutzen 17 steht in Fluidverbindung mit einem Ende der ersten Fluidpassage 111 der Wärmetauschvorrichtung 11 und ist bestimmungsgemäss vorgesehen, um aufzubereitende Flüssigkeit 51 der Vorrichtung 1 zur thermischen Aufbereitung zuzuführen. Ein Anschlussstutzen 18 steht in Fluidverbindung mit einem Ende der zweiten Fluidpassage 115 der Wärmetauschvorrichtung 11 und ist bestimmungsgemäss vorgesehen, um aufbereitete Flüssigkeit 62 aus der Vorrichtung 1 zur thermischen Aufbereitung abzuführen. Die erste Fluidpassage 111 steht an ihrem anderen Ende über eine Überströmleitung 113 mit der Fluidkammer in Fluidverbindung. Dabei ist die erste Fluidpassage innerhalb der Wärmetauschvorrichtung bis in einen deckennahen Bereich des Gehäuses geführt und es schliesst sich die Überströmleitung 113 an die erste Fluidpassage an. Die Überströmleitung 113 ist in Richtung zum Boden 151 des Gehäuses in einen bodennahen Bereich der Fluidkammer 12 geführt. Die erste Fluidpassage 111 mündet daher im bodennahen Bereich der Fluidkammer 12 an der Mündung 114 der Überströmleitung 113 in der Fluidkammer 12. Die Trennwand 16 endet ausgehend vom Boden 151 des Gehäuses vor der Decke 152. Dadurch ist ein deckennaher Überströmbereich 116 zwischen der Fluidkammer 12 und der zweiten Fluidpassage 115 der Wärmetauschvorrichtung gebildet, an dem die zweite Fluidpassage 115 mit der Fluidkammer 12 in unmittelbarer Fluidverbindung steht. Der Überströmbereich 116 bildet somit auch die Mündung der zweiten Fluidpassage 115 in der Fluidkammer 12. In der Fluidkammer 12 ist eine sogenannte Blankdrahtheizung als Mittel 121 zur Wärmezufuhr zur Flüssigkeit innerhalb der Fluidkammer 12 angeordnet. Zu deren Erläuterung sei zunächst auf die Figur 4 verwiesen. Ausgehend vom Boden 151 des Gehäuses erstrecken sich zwei nicht elektrisch isolierte Drähte 122 und 123. Die Drähte sind in Stützelementen 128 und 129 gehalten und sind nicht elektrisch leitend miteinander verbunden. Im in Figur 3 dargestellten eingebauten Zustand des Mittels 121 zur Wärmezufuhr innerhalb der Fluidkammer ist nur einer der Drähte 122 zu erkennen. Die Stützelemente 128 und 129 stützen die Drähte 122 und 123 innerhalb der Fluidkammer 12. Der Draht 122 verfügt über ein Anschlussterminal 124. Obschon nicht explizit dargestellt, erschliesst sich dem Fachmann ohne Weiteres, dass auch der Draht 123 über ein Anschlussterminal verfügt. Über die Anschlussterminals können die Drähte 122 und 123 derart mit einer Stromquelle verbunden werden, dass zwischen ihnen beispielsweise eine elektrische Spannung anliegt. Beispielsweise kann einer der Drähte 122 und 123 mit der Phase einer Wechselstromleitung verbunden sein und der andere mit der Erde oder dem Nullleiter. Es kann auch vorgesehen sein, dass beide Drähte 122 und 123 mit der Phase einer Wechselstromleitung verbunden sind und die Erdung über das Gehäuse 15 oder ein anderes innerhalb der Fluidkammer 12 angeordnetes elektrisch leitendes Element erfolgt. Daraus resultiert ein Stromfluss in einer Flüssigkeit innerhalb der Fluidkammer. Aufgrund dieses Stromflusses ergibt sich eine Erwärmung der Flüssigkeit in der Fluidkammer 12. Wie in Figur 3 zu erkennen, liegt das Mittel 121 zur Wärmezufuhr im Strömungsweg einer Flüssigkeit, welche von der Mündung 114 der Überströmleitung 113 zum Überströmbereich 116 strömt. Der Abstand zwischen der Mündung 114 der ersten Fluidpassage 111 in der Fluidkammer 12 und der Mündung 116 der zweiten Fluidpassage 115 in der Fluidkammer 12 entspricht annähernd der gesamten Höhenerstreckung der Fluidkammer bzw. annähernd der gesamten Erstreckung der Fluidkammer entlang einer Richtung zwischen den beiden Mündungen 114 und 116. Bestimmungsgemäss ist vorgesehen, dass ein Flüssigkeitsmassenstrom am Stutzen 17 in die erste Fluidpassage 111 der Wärmetauschvorrichtung 11 eintritt, diese durchströmt, durch die Überströmleitung 113 in den bodennahen Bereich der Fluidkammer 12 geführt wird und dort in die Fluidkammer 12 eintritt, innerhalb der Fluidkammer 12 zum Überströmbereich 116 strömt und schliesslich durch die zweite Fluidpassage 115 der Wärmetauschvorrichtung 11 strömt und am Stutzen 18 austritt. Beim Durchströmen der Fluidkammer 12 strömt die Flüssigkeit auch zwischen den Drähten 122 und 123 hindurch und wird durch einen zwischen den Drähten durch die Flüssigkeit fliessenden elektrischen Strom erwärmt. Bei der bestimmungsgemässen Aufstellung der beispielhaft dargestellten Vorrichtung 1 zur thermischen Aufbereitung, mit dem Boden 151 unten und der Decke 152 oben, schichtet sich die Flüssigkeit innerhalb der Fluidkammer so, dass die wärmste Flüssigkeit im deckennahen Bereich zu liegen kommt und in die zweite Fluidpassage 115 der Wärmetauschvorrichtung 11 eintritt. Innerhalb der Wärmetauschvorrichtung strömt die Flüssigkeit in der ersten Fluidpassage 111 in der dargestellten und bevorzugten Anordnung von unten nach oben, während die Flüssigkeit in der zweiten Fluidpassage von oben nach unten strömt. Es ist somit ein Gegenstromwärmetauscher realisiert. Beim Durchströmen der zweiten Fluidpassage 115 gibt die Flüssigkeit Wärme an die in der ersten Fluidpassage 111 strömende Flüssigkeit ab, so, dass diese beim Eintritt in die Fluidkammer 12 vorgewärmt ist. Die Flüssigkeit innerhalb der zweiten Fluidpassage 115 strömt spiralförmig am Äusseren der Rohrleitung 112 entlang und/oder über zwischen der Rohrleitung 112 und den diese einschliessenden Wänden gebildeten Engstellen in zwischen den Rohrwindungen gebildete Totwassergebiete. In jedem Falle kommt es zu einer intensiven Verwirbelung der Strömung in der zweiten Fluidpassage 115 und somit zu einem intensiven Wärmeübergang an die Rohrleitung und einem innerhalb der Rohrleitung in der ersten Fluidpassage strömenden Flüssigkeit. Derartige Anordnungen werden auch als Ringspaltwärmetauscher oder Stromschnellenwärmetauscher bezeichnet. Ein derartiger Ringspaltwärmetauscher oder Stromschnellenwärmetauscher ist in der europäischen Patentanmeldung EP 24 170 880.9 beschrieben. Weiterhin kann die Rohrleitung 112 aus einem Wellrohr bestehen, was die Wärmeaustauschfläche vergrössert uns weiterhin auch die Turbulenz des in der ersten Fluidpassage 111 innerhalb der Rohrleitung 112 strömenden Fluids erhöht und somit den Wärmeübergang innerhalb der Wärmetauschvorrichtung weiter vergrössert.

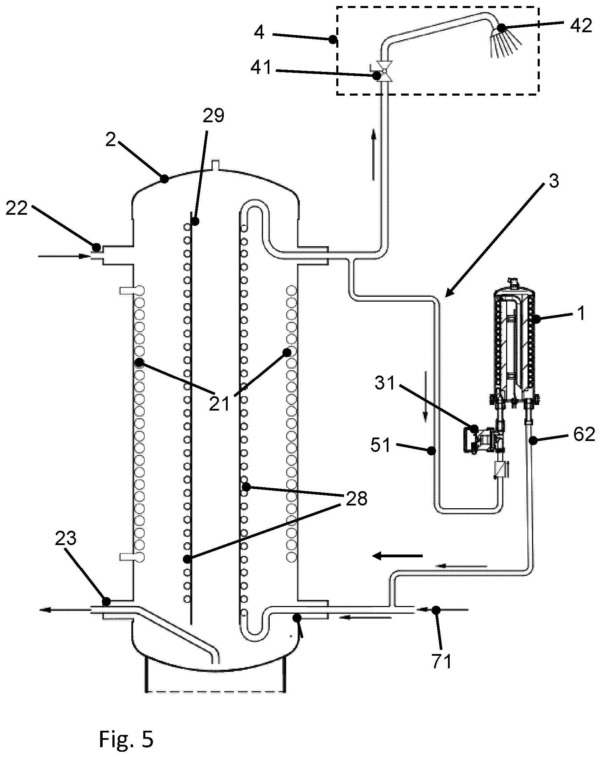

In Figur 5 ist ein System zur Bereitstellung von Brauchwarmwasser dargestellt, das einen Brauchwarmwassererzeuger 2 umfasst, der ohne ein stagnierendes Brauchwarmwasser-Speichervolumen nach dem Prinzip eines Durchlauferhitzers arbeitet. Das Zirkulationssystem 3 mit der Vorrichtung 1 zur thermischen Aufbereitung und den Verbraucherarmaturen 4 entspricht im Wesentlichen dem oben in Verbindung mit Figur 2 beschriebenen System. Im Inneren des Brauchwarmwassererzeugers ist ein wendelförmiges Wärmetauscherrohr 28 angeordnet und auf einem Stützzylinder 29 aufgewickelt. Das Wärmetauscherrohr ist in die Strömung des Zirkulationssystems 3 eingebunden, derart, dass Brauchwarmwasser an einem unteren Ende des Wärmetauscherrohrs 28 in das Wärmetauscherrohr gefördert wird und am oberen Ende des Wärmetauscherrohrs aus dem Wärmetauscherrohr wieder in das Zirkulationssystem 3 einströmt. Das Zirkulationssystem fördert also Brauchwarmwasser durch das Wärmetauscherrohr. des Brauchwarmwassererzeugers 2 ist über die Anschlüsse 22 und 23 beispielsweise mit einer nicht dargestellten Wärmepumpe verbunden. Der Vorlauf von der Wärmepumpe strömt am Anschluss 22 ein. Die kälteste Flüssigkeit im Inneren des Brauchwarmwassererzeugers 2 strömt oberhalb des Bodens als Rücklauf durch den Anschluss 23 zur Wärmepumpe zurück. Optional ist noch eine Wärmetauscherberohrung 21 für eine Zusatzheizung via Solarthermie im Brauchwarmwassererzeuger 2 angeordnet. Auf diese Weise kann das Innere des Brauchwarmwassererzeugers 2 mit Heizflüssigkeit für die Erwärmung von Brauchwasser, das im Wärmetauschrohr 28 strömt, «geladen» werden. Die Heizflüssigkeit umgibt das Wärmetauscherrohr 28 und erwärmt das darin strömende Brauchwarmwasser. Die Zirkulationspumpe 31 fördert während ihrem Betrieb Brauchwarmwasser durch das Zirkulationssystem 3 und durch das Wärmetauscherrohr 28. Dabei strömt der zirkulierte Massenstrom auch durch die Vorrichtung 1 zur thermischen Aufbereitung von Flüssigkeiten und wird während des Durchströmens dieser Vorrichtung zur Abtötung von Legionellen thermisch desinfiziert, wie oben beschrieben.

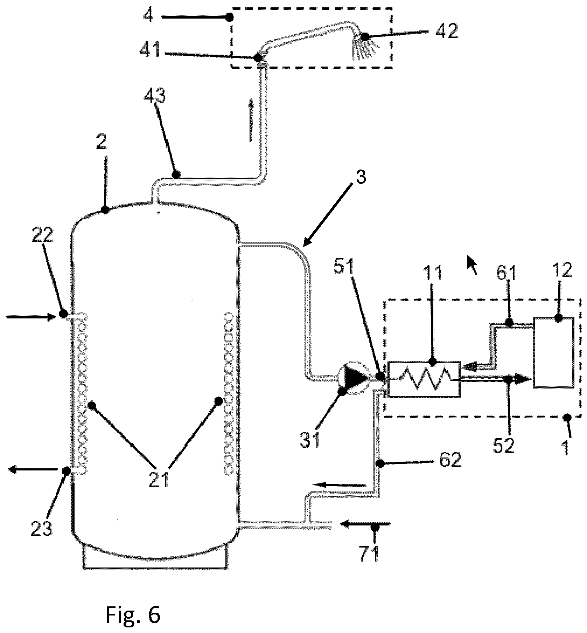

In Figur 6 ist ein System zur Bereitstellung von Brauchwarmwasser dargestellt, bei dem die Stichleitung 43 zur Versorgung der Armatur 4 nicht vom Zirkulationssystem 3 abzweigt, sondern direkt an den Brauchwarmwassererzeuger und -speicher 2 angeschlossen ist. Das Zirkulationssystem 3 wälzt das stagnierende Volumen innerhalb des Brauchwarmwassererzeugers und - speichers 2 um und führt es hierbei über eine Vorrichtung 1 zur thermischen Infektion, wodurch auf oben beschriebene Weise die Konzentration an Legionellen im stagnierenden Volumen des Brauchwarmwassererzeugers und -speichers 2 unter den gesundheitlich unbedenklichen und/oder gesetzlich vorgegebenen Grenzwerten gehalten werden kann.

Obschon der Gegenstand der vorliegenden Beschreibung anhand ausgewählter Ausführungsbeispiele erläutert wurde, sollen diese nicht einer Einschränkung der beanspruchten Erfindung dienen. Die Ansprüche umfassen Ausführungsformen, die nicht explizit dargestellt sind, und Ausführungsformen, die von den gezeigten Beispielen abweichen, sind dennoch von den Ansprüchen gedeckt.

## Patentansprüche

1. Vorrichtung (1) zur thermischen Aufbereitung von Flüssigkeiten, umfassend eine Wärmetauscheinrichtung (11) und eine Fluidkammer (12), wobei die Wärmetauscheinrichtung (11) eine erste Fluidpassage (111) und eine zweite Fluidpassage (115) umfasst, wobei die erste Fluidpassage und die zweite Fluidpassage für einen Wärmeaustausch zwischen einer Flüssigkeit in der ersten Fluidpassage und einer Flüssigkeit in der zweiten Fluidpassage konfiguriert sind, und wobei die Fluidkammer (12) wenigstens ein Mittel (121) zur Wärmezufuhr zu einer Flüssigkeit in der Fluidkammer aufweist,
wobei die erste Fluidpassage (111) und die zweite Fluidpassage (115) mit der Fluidkammer (12) in Fluidverbindung stehen, wodurch die erste Fluidpassage und die zweite Fluidpassage über die Fluidkammer miteinander in Fluidverbindung stehen und wobei wenigstens ein Teil wenigstens eines Mittels (12) zur Wärmezufuhr zu einer Flüssigkeit in der Fluidkammer in einem Strömungsweg zwischen der ersten Fluidpassage und der zweiten Fluidpassage innerhalb der Fluidkammer angeordnet ist.

2. Vorrichtung gemäss Anspruch 1, wobei wenigstens eine der Fluidpassagen der Wärmetauschvorrichtung über eine Überströmleitung (113) mit der Fluidkammer (12) in Fluidverbindung steht.

3. Vorrichtung gemäss einem der vorstehenden Ansprüche, wobei wenigstens eine der Fluidpassagen unmittelbar mit der Fluidkammer in Fluidverbindung steht.

4. Vorrichtung gemäss einem der vorstehenden Ansprüche, wobei der Abstand zwischen einer Mündung (114) der ersten Fluidpassage in der Fluidkammer (12), an der die erste Fluidpassage (111) der Wärmetauschvorrichtung (11) mit der Fluidkammer (12) in Fluidverbindung steht, und einer Mündung (116) der zweiten Fluidpassage in der Fluidkammer, an der die zweite Fluidpassage (115) der Wärmetauschvorrichtung (11) mit der Fluidkammer (12) in Fluidverbindung steht, wenigstens 50% der Erstreckung der Fluidkammer entlang einer Richtung zwischen den beiden genannten Mündungen (114, 116) beträgt.

5. Vorrichtung gemäss einem der vorstehenden Ansprüche, wobei die Wärmetauschvorrichtung (11) und die Fluidkammer (12) in einem gemeinsamen Gehäuse (15) angeordnet sind, wobei innerhalb des Gehäuses eine Trennwand (16) angeordnet ist, welche die Fluidkammer und die Wärmetauschvorrichtung voneinander trennt.

6. Vorrichtung gemäss dem vorstehenden Anspruch, wobei die erste Fluidpassage (111) innerhalb einer Rohrleitung (112) gebildet ist, welche auf einer Seite der Trennwand (16) zwischen der Trennwand und einer Wand des Gehäuses (15) verläuft und die zweite Fluidpassage (115) auf der genannten Seite der Trennwand zwischen der Trennwand (16) und der Wand des Gehäuses (15) sowie um die Rohrleitung (112) herum gebildet ist.

7. Vorrichtung gemäss einem der beiden vorstehenden Ansprüche, wobei die Trennwand (16) eine umlaufende Trennwand ist, wobei die Fluidkammer (12) radial innerhalb der umlaufenden Trennwand (16) gebildet ist und die Wärmetauschvorrichtung (11) in einem Ringraum zwischen der umlaufenden Trennwand (16) und der Wand des Gehäuses (15) gebildet ist.

8. Vorrichtung gemäss dem vorstehenden Anspruch, wobei die erste Fluidpassage (111) der Wärmetauschvorrichtung (11) in einer wendelförmig in dem Ringraum verlaufenden Rohrleitung (112) gebildet ist und die zweite Fluidpassage (115) der Wärmetauschvorrichtung in dem Ringraum und um die Rohrleitung (112) herum gebildet ist.

9. Vorrichtung gemäss einem der Ansprüche 5 bis 8 in Verbindung mit Anspruch 3, wobei die Trennwand (16) sich von einem Boden (151) des Gehäuses (15) erstreckt und in einem an den Boden angrenzenden Bereich die Fluidkammer (12) und die Wärmetauschvorrichtung (11) voneinander trennt und die Trennwand (16) in einem an eine Decke (152) des Gehäuses angrenzenden Bereich, wobei die Decke des Gehäuses dem Boden des Gehäuses gegenüberliegend angeordnet ist, wenigstens eine Öffnung (116) aufweist, durch die eine unmittelbare Fluidverbindung zwischen der Fluidkammer (12) und wenigstens einer der Fluidpassagen (115) der Wärmetauschvorrichtung (11) im deckennahen Bereich der Fluidkammer hergestellt ist.

10. Vorrichtung gemäss einem der Ansprüche 5 bis 9 in Verbindung mit Anspruch 2, wobei die Trennwand (16) sich von einem Boden (151) des Gehäuses (15) erstreckt und in einem an den Boden angrenzenden Bereich die Fluidkammer (12) und die Wärmetauschvorrichtung (11) voneinander trennt und die Überströmleitung (113) in einem an eine Decke (152) des Gehäuses (15) angrenzenden Bereich, wobei die Decke des Gehäuses dem Boden des Gehäuses gegenüberliegend angeordnet ist, aus der Wärmetauschvorrichtung (11) in die Fluidkammer (12) geführt ist und innerhalb der Fluidkammer in Richtung zum Boden (151) des Gehäuses zu einem bodennahen Bereich der Fluidkammer geführt ist und dort in die Fluidkammer mündet, wodurch eine Fluidverbindung zwischen der Fluidkammer (12) und wenigstens einer der Fluidpassagen (111) der Wärmetauschvorrichtung (11) im bodennahen Bereich der Fluidkammer hergestellt ist.

11. Vorrichtung gemäss einem der vorstehenden Ansprüche, wobei das wenigstens eine Mittel zur Wärmezufuhr (121) zu einer Flüssigkeit in der Fluidkammer eine Blankdrahtheizung (122, 123) umfasst.

12. System zur Bereitstellung von Brauchwarmwasser, umfassend einen Brauchwarmwassererzeuger und/oder -speicher (2) und ein Brauchwarmwasser-Zirkulationssystem (3), welches an den Brauchwarmwassererzeuger und/oder -speicher (2) angeschlossen ist und konfiguriert ist, Fluid aus dem Brauchwarmwassererzeuger und/oder - speicher (2) zu entnehmen und in den Brauchwarmwassererzeuger und/oder -speicher (2) zurückzuführen, wobei in das Brauchwarmwasser-Zirkulationssystem eine Vorrichtung zur thermischen Aufbereitung von Flüssigkeiten (1) gemäss einem der vorstehenden Ansprüche derart integriert ist, dass innerhalb des Brauchwarmwasser-Zirkulationssystems eine erste der Fluidpassagen (111) der Wärmetauschvorrichtung (11), die Fluidkammer (12) und die zweite der Fluidpassagen (115) der Wärmetauschvorrichtung (11) hydraulisch in Reihe geschaltet sind.

13. System zur Bereitstellung von Brauchwarmwasser gemäss dem vorstehenden Anspruch, wobei von dem Brauchwarmwasser-Zirkulationssystem wenigstens eine Stichleitung (43) abzweigt, die zu wenigstens einer Armatur (4) zur Entnahme von Brauchwasser führt.

14. Verfahren zur thermischen Brauchwarmwasser-Aufbereitung in einem System zur Bereitstellung von Brauchwarmwasser gemäss dem vorstehenden Anspruch umfassend, einen Massenstrom von Brauchwarmwasser aus dem Brauchwarmwassererzeuger und/oder - speicher (2) zu entnehmen, wenigstens einen Teilmassenstrom des Massenstroms von Brauchwarmwasser durch die erste der Fluidpassagen (111) der Wärmetauschvorrichtung (11) der Fluidkammer zuzuführen, dem der Fluidkammer (12) zugeführten Brauchwarmwassermassenstrom in der Fluidkammer Wärme zuzuführen, und, wenigstens einen Teilmassenstrom des der Fluidkammer zugeführten Brauchwarmwassermassenstroms durch die zweite der Fluidpassagen (115) der Wärmetauschvorrichtung (11) wieder dem Brauchwarmwasser-Zirkulationssystem zuzuführen, wobei der durch die erste der Fluidpassagen (111) der Wärmetauschvorrichtung geführte Brauchwarmwassermassenstrom im Wärmetausch mit dem durch die zweite der Fluidpassagen (115) der Wärmetauschvorrichtung geführten Brauchwarmwassermassenstrom vorgewärmt wird und der durch die zweite der Fluidpassagen der Wärmetauschvorrichtung geführte Brauchwarmwassermassenstrom im Wärmetausch mit dem durch die erste der Fluidpassagen der Wärmetauschvorrichtung geführten Brauchwarmwassermassenstrom abgekühlt wird.

15. Verfahren zur thermischen Aufbereitung einer Flüssigkeit, umfassend, einen ersten Massenstrom der Flüssigkeit einer Vorrichtung zur Wärmezufuhr (121) zuzuführen und zu erwärmen und einen zweiten Massenstrom der erwärmten Flüssigkeit von der Vorrichtung zur Wärmezufuhr abzuführen, wobei der erste Massenstrom im Wärmetausch mit dem zweiten Massenstrom vorgewärmt wird und der zweite Massenstrom im Wärmetausch mit dem ersten Massenstrom abgekühlt wird.
